# EUROPEAN PATENT APPLICATION

(11) **EP 4 692 538 A1**
(43) Date of publication of application: **11.02.2026**
(21) Application number: 24193195.5
(22) Date of filing: 06.08.2024
(51) Int. Cl.: F03D 80/50

(54) **WIND TURBINE GENERATOR UPENDING DEVICE AND METHOD OF USING THE SAME**

(71) Applicant: Ørsted Wind Power A/S, 7000 Fredericia Skaerbaek (DK)
(72) Inventor: KASTRUP, Michael, 7000 Fredericia Skaerbaek (DK); SAGUÉS, Guillem Blanco, 7000 Fredericia Skaerbaek (DK)
(74) Representative: Lewis Silkin LLP

(57) **Abstract**

Wind turbine generator upending device (1) for upending a wind turbine generator (2). The device comprises a base (3) and a generator support (4) having an interface (41) for connecting to the nacelle face (21) of the generator (2) for mounting the generator (2). A pivotable coupling (5) pivotably connects the generator support (4) to the base (3) and is pivotable between an upright position where the generator (2) is mounted in an upright orientation and a horizontal position where the generator (2) is mounted in a horizontal orientation. A crane attachment (6) is provided for connecting the generator support (4) to a crane line (7) for controlling the pivoting of the generator support (4) between its upright and horizontal positions.

## Description

The present invention concerns a wind turbine generator upending device and methods of using the device, for example for removing and replacing a bearing in a wind turbine generator. The invention is particularly relevant to wind turbine generator decommissioning and refurbishment. The invention is also relevant to a device and method of upending a direct-drive wind turbine generator. The invention is most particularly relevant to devices and methods for servicing offshore wind turbine generators.

Offshore wind has become an increasingly important part of our energy supply infrastructure. As existing offshore wind installations age, there is a need to replace parts, systems and components within them over time. The generator which rotatably connects the blade hub to the nacelle and generates electricity as the hub rotates is one part which often needs replacement, maintenance, or refurbishment. In particular, the generator is a complex assembly because it comprises both mechanical bearings and electrical systems and is relatively exposed to the marine environment. This means that this part has a comparatively limited lifespan compared to the wind turbine installation as a whole.

There are however significant challenges with refurbishing offshore wind turbine generators. Inherently, the marine environment makes operations significantly more complex than they would be onshore and necessitates the use of specialist equipment and vessels. Currently, the most common method of removing the generator involves detaching the blades, and then lifting the entire nacelle and generator assembly as one piece from the up-tower location down to a vessel. Once on deck, a mechanical upending tool is used to support the generator as it is tilted away from the front face of the nacelle, and laid horizontally on the deck.

A particularly challenging maintenance operation arises when the main bearing of a wind turbine generator needs replacing. With current methods, the generator needs to be lifted in its horizontal orientation up onto a special elevated repair frame, usually along with the nacelle of the wind turbine. The elevated repair frame acts to support the generator in an elevated position with a space below to allow maintenance engineers to access the bearing from underneath the generator. From here, the bearing assembly needs to be detached and lowered down to a slidable carriage, which allows the detached bearing to be slid out from under the generator. However, with this system, the generator needs to be lifted up onto its seat on the frame. At the same time, the repair location would typically also need to be undercover to protect the interior components of the generator from the environment while it is disassembled, as well as have enough room to facilitate both the generator and the nacelle. As such, this combination of requirements means that the repair frame will be located in a building with a retractable roof to allow the generator to be lowered down through the roof onto its seat on the frame.

The above factors mean that significant space is required when such repair operations are undertaken. Not only is space required to detach the generator from the nacelle and upend it, but also to support the mechanics and large cranes for tilting the generator and then lifting it up above the roof of a repair building, retracting the roof and lowering the generator. This limitation is particularly detrimental when such repair operations are needed offshore, because it necessitates the use of much larger vessels with more deck space to facilitate both the generator and the nacelle, as well as larger cranes and specialist equipment. The specialisation and complexity of the vessels used in these operations mean that they are extremely expensive.

The present invention therefore seeks to address the above issues.

According to a first aspect of the present invention, there is provided a wind turbine generator upending device for upending a wind turbine generator, wherein the wind turbine generator has a hub face to which a blade hub is attachable to the generator and a nacelle face to which the generator is attachable to a nacelle, the device comprising: a base; a generator support comprising an interface for connecting to the nacelle face for mounting a generator thereto; a pivotable coupling for pivotably connecting the generator support to the base, wherein the generator support is pivotable between an upright position where the generator is mounted in an upright orientation and a horizontal position where the generator is mounted in a horizontal orientation; and a crane attachment for connecting the generator support to a crane line for controlling the pivoting of the generator support between its upright and horizontal positions.

In this way, a simplified upending device is provided which utilises a crane to control tilting of the generator into a horizontal position. As such, the crane line can be used to lower the generator, with the generator support pivoting to restrain the movement path of the generator as it transitions from a vertical orientation into a horizontal orientation. Advantageously, this avoids the need for separate systems for tilting the generator. In addition, it also allows the upending device to be used in combination with a lifting tool for lifting a separated generator down from a nacelle at an up-tower location. That is, a generator conveyed in this way may be directly connected to the interface on the generator support, with the support being pivotable to align the connections. Moreover, once in the horizontal position, a mounted generator can easily be stored on the base without having to detach it from the upending device.

In embodiments, the base further comprises one or more wheels for moving the base along a surface. In this way, a mounted generator can easily be moved to another location on the base without having to detach it from the upending device. In other embodiments, the base can be connected to a carrier vehicle such as a rail car or a self propelled modular transporter (SPMT), or the like.

In embodiments, the one or more wheels are for engagement in a track. The track provides a smooth level surface for passage of the relatively heavy generator load, with minimum friction between, for example, the steel rails and the wheels. In this way, a mounted generator can easily be moved between controlled positions along a track. For example, the upending device may be first positioned in a loading location on the track, at which the generator can be mounted to the generator support. Once mounted and pivoted down to the horizontal position, the generator can then be moved to a repair location along the track, for example within a building. As such, the generator can be easily moved into a building or covered area for disassembly without having to lift it through a retractable roof.

In embodiments, the crane attachment is provided on a distal end of the generator support. In this way, the moment applied by the crane line can be maximised.

In embodiments, the generator support comprises frame locking formations for locking the generator support to the base when the generator support is in a horizontal position. In embodiments, the base comprises a frame locking mechanism for locking the base to the generator support when the generator support is in a horizontal position. In this way, the relative movement between the mounted generator and the base can be prevented, allowing the generator to be stabilised via its connection to the support. This provides positional precision during maintenance operations. For example, during subsequent detachment of the bearing, the improved stability of the position of the generator helps to mitigate the risk of component damage as parts are withdrawn. In embodiments, the device comprises a locking actuator, such as a hydraulic actuator, for engaging with the support locking part and/or the base locking part to lock the generator support.

In embodiments, the base comprises a rotor locking mechanism for locking a rotor on the generator when the generator support is in a horizontal position. In this way, the relative movement between the stator and rotor parts of the mounted generator can be prevented. This provides positional precision during maintenance operations. For example, during subsequent detachment of the bearing, the improved stability of the position of the generator helps to mitigate the risk of component damage as parts are withdrawn. In embodiments, the device comprises a locking actuator, such as a hydraulic actuator, for engaging with the rotor locking part to lock the rotor.

In embodiments, the pivotable coupling comprises a receptacle for releasably receiving the generator support. In this way, the generator support may be detached from the base. For instance, a mounted generator may be detached or attached to the base via the coupling.

In embodiments, the wind turbine generator upending device further comprises an upright position locking mechanism for releasably securing the pivotable coupling in the upright position. In this way, the generator support may be fixed into a mounting position for receiving a generator. As such, a generator lifted from a nacelle may be more easily attached to the generator support for subsequent upending by the device. In embodiments, the pivotable coupling may comprise the upright position locking mechanism.

In embodiments, the interface corresponds to the mounting interface provided on the nacelle. This may thereby allow the frame to be fixed to the generator using the same connection provided for the nacelle. In embodiments, the interface comprises keying formations for mating with corresponding keying formations provided on the nacelle face. In this way, the keying formations provided on the opposing faces may inter-engage to ensure alignment between these parts.

According to a further aspect, there is provided a method of using the above wind turbine upending device, the method comprising the steps of: providing the generator support in an upright position; mounting the generator to the generator support by connecting to the nacelle face of the generator to the interface of the generator support; connecting the generator support to the crane line using the crane attachment; and pivoting the generator support under the control of the crane line from its upright position to its horizontal position.

In this way, a method is provided in which a crane line can be used to pivot a generator over to a horizontal orientation. Advantageously, this avoids the need for separate systems for tilting the generator. In addition, it also allows the upending device to be used in combination with a lifting tool for lifting a separated generator down from a nacelle at an up-tower location. Moreover, once in the horizontal position, a mounted generator can easily be stored on the base without having to detach it from the upending device.

In embodiments, the step of pivoting the generator support comprises moving the base laterally relative to the crane line as the crane line is lowered vertically for pivoting the generator support to its horizontal position. In this way, the crane boom may be maintained in a fixed position, with the line simply being reeled out to lower the distal end of the support structure, with the base moving away from the vertical axis of the crane line to move the pivot point relative to it.

In embodiments, the method further comprises the step of locking the generator support to the base once the generator support is in a horizontal position. In this way, positional stability can be improved.

In embodiments, the method further comprises the step of locking a rotor on the generator when the generator support is in a horizontal position. In this way, positional stability can be achieved.

In embodiments, the method further comprises the step of disconnecting the crane line from the generator support once the generator support is in a horizontal position; and moving the base laterally with the generator mounted in its horizontal orientation into a repair location. In this way, a mounted generator can easily be moved to another location for repair without having to detach it from the upending device. As such, the generator can be easily moved under cover or to where equipment is available for maintenance operations, such as replacement of the main bearing.

In embodiments, the method further comprises the step of removing a bearing from the generator mounted in its horizontal orientation, wherein the generator is connected to the generator support by the nacelle face and the bearing is removed by lifting upwards from the hub face. In this way, rather than seating a generator in an elevated position and removing a bearing from underneath, the generator can be mounted horizontally, and the bearing can be lifted out, for instance using a crane. An elevated platform at the repair location may also be used to allow a maintenance engineer to access the upper face of the generator. As such, the prior need to lower the whole generator through the roof of a covered building to mount it to an elevated frame is avoided. Instead, the generator may be moved horizontally into the repair location, through a door of an enclosing building. In embodiments, the generator may be connected to the interface by its nacelle face and the bearing may be removed from the hub face of the generator.

Illustrative embodiments of the present invention will now be described with reference to the accompanying drawings in which:
Figure 1 shows a wind turbine generator upending device according to an illustrative embodiment with a wind turbine generator mounted thereon in a substantially upright orientation;
Figure 2 shows the wind turbine generator upending device of Figure 1, with the lifting device detached;
Figure 3 shows a wind turbine generator upending device with the wind turbine generator in a horizontal orientation;
Figure 4 shows a cross-sectional view of the wind turbine generator upending device with the wind turbine generator in a horizontal orientation;
Figure 5 shows a wind turbine generator being moved when mounted to the wind turbine generator upending device; and
Figure 6 shows a wind turbine generator located at a repair location within a repair building.

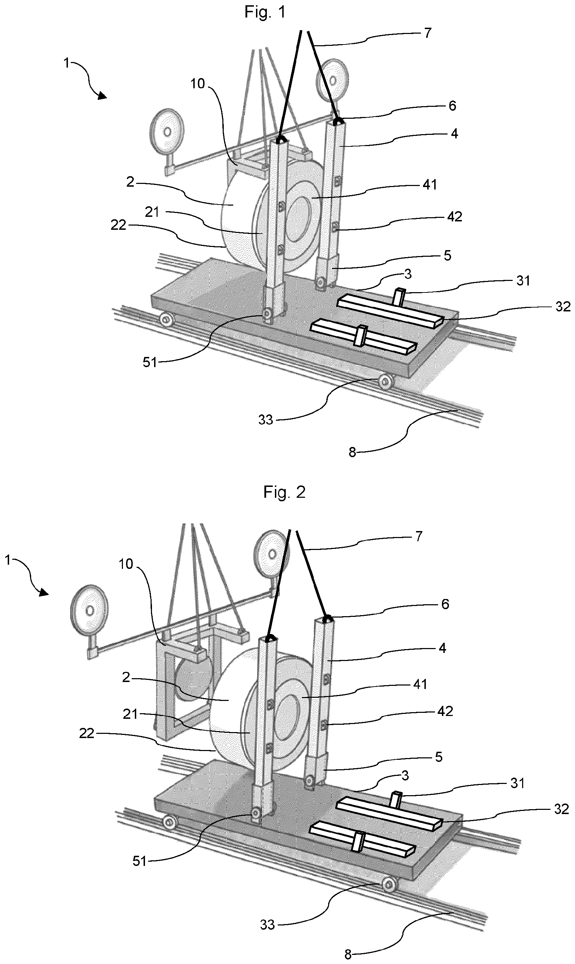

Figures 1 to 6 show a wind turbine generator upending device 1 according to an illustrative embodiment with a wind turbine generator 2 mounted thereon and a lifting device 10.

The generator may be of any kind, however, embodiments of the invention are particularly applicable to direct drive generators as they often sit between the nacelle and the rotor hub. Such direct drive generators involve the rotor directly driving a synchronous generator, thereby avoiding the need for a separate gearbox. As such, these units are typically larger than classical gear boxed generators. In this respect, in use, direct drive wind turbine generators 2 are typically connected between a nacelle and a blade hub of a wind turbine and integrate the bearing 23 for rotation of the blade hub and blades relative to the nacelle. As such, the generator 2 comprises a hub face 22 which has an interface for connecting the generator 2 to the blade hub and a nacelle face 21 which has an interface for connecting the generator 2 to the nacelle. A main bearing 23 is provided between the rotor and stator parts of the generator 2 so that power is generated as the blade hub rotates.

The wind turbine generator 2 in Figure 1 is shown connected to a lifting device 10 used to convey the generator 2 from the nacelle. That is, the lifting device 10 forms a yoke or carrier for supporting the generator 2 as it is conveyed down from the nacelle in an up-tower location, down to the deck of a vessel, where the upending device 1 may be located. As shown, the lifting device 10 includes two propellers for providing yaw control for yawing the lifting device 10 in the air about the hoisting line as it is hoisted by a crane. It will be understood that the upending device 1 may also be used with other generator repair methodologies, for instance where the whole nacelle and generator are lifted down onto the deck of a vessel.

The upending device 1 comprises a base 3 and a pivotable support frame forming a generator support 4 for supporting the generator 2. The generator support 4 comprises two parallel struts connected by an interface 41 which forms the mounting for the nacelle face 21 of the generator 2. For this, the interface 41 comprises a plurality of connection formations which correspond to opposing connection formations provided on the nacelle face 21 of the generator. As such, the interface substantially mirrors the connection interface which would be provided on the nacelle of the wind turbine. As such, the existing mounting interfaces provided on the generator 2 can be repurposed for mounting the generator 2 onto the generator support 4. When the nacelle face 21 is mounted to the interface 41, the opposing connection formations mate with one another to allow the generator 2 to be fixed to the generator support 4. For example, fasteners such as locking nuts may be used to releasably secure the connection between these parts. In other embodiments, an actuatable locking mechanism may be used to fix the connection.

The struts of the generator support 4 are connected to a pivotable coupling 5 which links the generator support 4 to the base 3 and allows it to pivot relative thereto. In this embodiment, the struts are releasably received within receptacles forming part of the pivot mechanism within the pivotable coupling 5. This thereby allows the generator support 4 to be detached from the base 3, if needed. That is, the generator support 4 may be detachably coupled with the pivotable coupling 5, more specifically, the receptacles of the pivotable coupling 5. That is, pivotable coupling 5 may comprise a generator support coupling mechanism (not shown). The generator support coupling mechanism may be a friction lock, a pin, a spring-loaded pin, a latch, a screw, a magnetic lock, hydraulic, or the like, to releasably connect the generator support 4 with the pivotable coupling 5. In other embodiments, the generator support 4 is fixed to the coupling.

The pivotable coupling 5 allows the generator support 4 to pivot between an upright position and a horizontal position. That is, the pivotable coupling 5 may comprise a pivot point. The pivot point may comprise a hinge, a pivot joint, a ball and socket joint, or the like. As such, where a generator 2 is mounted to the interface 41 of the generator support 4, it can be upended by transitioning it between an upright orientation and a horizontal orientation.

In the upright position, the generator support 4 may be held, by the pivotable coupling 5, at an inclined angle which substantially matches the angle at which the blade hub would be fitted to the nacelle face 21 of the generator 2. That is, the pivotable coupling 5 may be lockable in a position by a locking mechanism 51. The locking mechanism may be provided to hold the struts of the generator support frame 4 in position during a mounting operation and then released when the generator 2 is to be upended.

The locking mechanism 51 may be configured to hold pivotable coupling 5, and therefore the generator support 4 (and the generator 2, when attached) at an angle (A) of between 85 degrees and 105 degrees with respect to the base 3, more preferably between 90 degrees and 100 degrees, more preferably still between 92 and 98 degrees, most preferably around 96 degrees. The angle A is the angle between the pivotable coupling 5 (or generator support 4) and the base 3, at the side on which the generator 2 is mounted. The locking mechanism 51 may be a friction lock, a pin, a spring loaded pin, a latch, a screw, a magnetic lock, hydraulic, or the like.

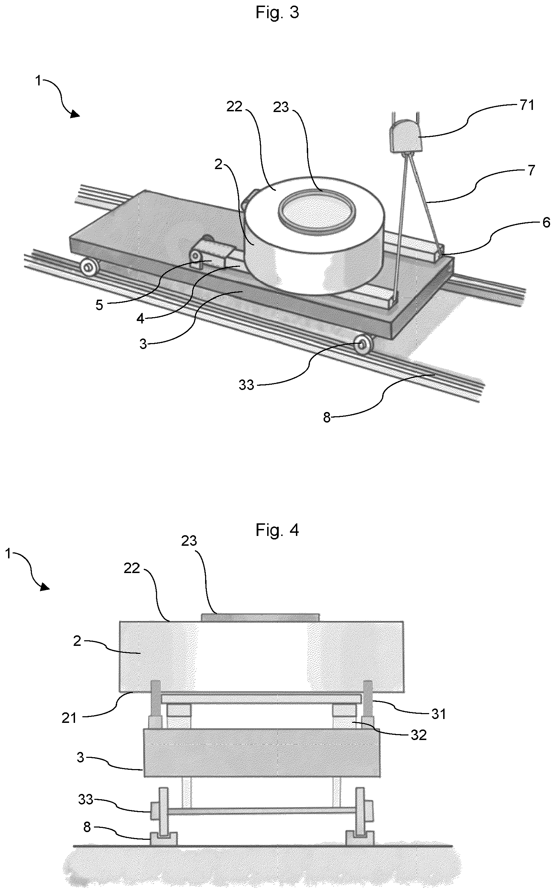

A crane attachment 6 is provided on a distal end of the generator support 4. That is, the crane attachment 6 may be provided on a distal end of the support struts of the generator support 4. In this embodiment, the crane attachment 6 is provided as two loops about which a crane line 7 can be connected. As shown in this embodiment, the crane line 7 has two limbs connecting via a block 71 (see Figure 3), with each limb having a shackle at its end for connection around the crane attachment loops 6. As such, pivoting of the generator support 4 is restrained by its tether to the crane line 7. Accordingly, movement of a generator mounted to the generator support 4 can be controlled by raising and lowering the crane line 7 relative to the base 3.

In use, once the locking mechanism 51 of the pivotable coupling 5 has been released, the crane line 7, via the crane attachment 6, bears the weight of the generator 2. That is, the crane line 7, via the crane attachment 6, works against gravitational forces to slowly lower the generator support 4, and therefore the generator 2 (when attached), from the substantially upright position to the horizontal position.

The base 3 is provided as a moveable carriage with wheels 33 which, in this embodiment, engage into tracks 8 provided on the deck of a vessel. The tracks may also be provided at another location, such as onshore. In some embodiments, the base 3 may be transported with or by an external device. As such, the base 3 can be moved horizontally between positions along the ground. The upper surface of the base 3 comprises a frame locking mechanism 32 and a rotor locking mechanism 31. When the generator support 4 is moved into its horizontal position, its support struts engage with the frame locking mechanism 32, which is activatable to engage onto frame locking formations 42 provided on the generator support 4 to lock the generator support 4 in place relative to the base 3. The frame locking mechanism 32 may be a latch, a press fit, a magnetic lock, or the like. The frame locking mechanism 32 may comprise friction plates the further engage the generator support 4.

Similarly, with a generator 2 mounted to the generator support 4 in its horizontal position, the rotor locking mechanism 31 is activatable to engage onto the rotor and prevent its movement relative to the base 3. Furthermore, because of the actions of the rotor locking mechanism 31 and the frame locking mechanism 32, the rotor and the stator of the generator 2 are fixed relative to one another. These mechanisms help ensure positional stability during subsequent maintenance operations. The rotor locking mechanism 31 may interface with multiple parts of the rotor. That is, there may be multiple connection points between the rotor locking mechanism 31 and the rotor. The rotor locking mechanism 31 may be a pin, for example a pneumatic or hydraulic expansion pin. The shape of the base 3 may correspond to the shape of the generator 2, such that the rotor of the generator 2 has many engagement points with the rotor locking mechanism 31. That is, at some points, the base 3 may be as wide as the generator 2.

A method of using the wind turbine upending device 1 will now be described. The device 1 may be provided first in an exposed loading location on the deck of a vessel. As such, a generator 2 mounted to a lifting device 10 can be lowered down from a nacelle of an adjacent wind turbine to the upending device 1. As shown in Figure 1, the generator support 4 may be held in an upright position, and the nacelle face 21 of the generator 2 can be aligned to the interface 41 and connected thereto. Once connected, the lifting device 10 can be detached from the hub face 22 of the generator 2 and lifted away, as shown in Figure 2. This leaves the generator 2 mounted to the generator support 4 and supported in an upright orientation.

The generator support 4 is attached to the crane line 7 using the crane attachment 6. This connection can be established before or after the generator 2 has been mounted. As shown in Figure 3, the generator support 4 with the generator 2 mounted thereon, can be pivoted down, restrained by its tether to the crane line 7. As such, the pivoting movement of the generator mounted to the generator support 4 can be controlled by lowering the crane line 7 relative to the base 3. At the same time, the base 3 may be moved along the track 8 to move the pivot point away from the vertical axis of the crane line 7. Alternatively, or simultaneously, the crane line 7 may be moved in a horizontal direction, relative to the base 3, such that the movement of the base 3 is reduced or the base 3 is static.

As shown in Figures 3 and 4, once the generator support 4 is in the horizontal position, the hub face 22 of the generator 2 is exposed facing upwardly for allowing access to the main bearing 23. At this point, the frame locking mechanism 32 and rotor locking mechanism 31 can be actuated to lock the generator support 4 and the generator rotor in place. At the same time, the crane line 7 may be disconnected from the generator support 4.

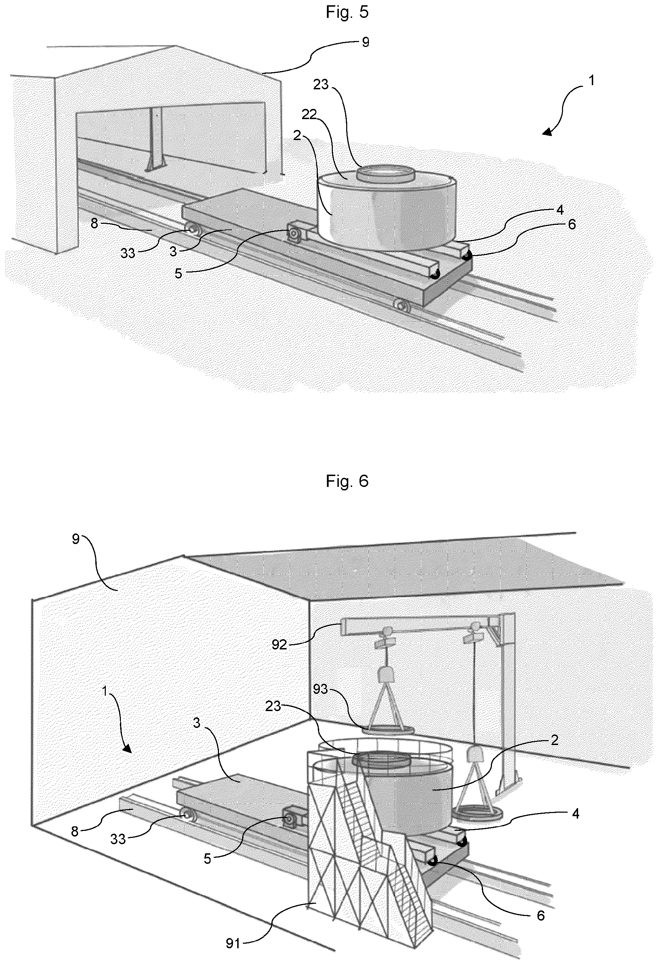

As shown in Figure 5, the base 3 can then be moved laterally along the track 8 away from the loading location. In this case, the base 3, with the generator 2 mounted thereto, can be moved into a repair location within a building 9. The building 9 may provide a covered enclosure for protecting the generator during a repair operation.

As shown in Figure 6, the building 9 encloses a repair location for undertaking repairs and comprises a small crane 92 or other hoisting device for lifting the bearing 23 vertically, as well as an elevated platform 91 for allowing a maintenance engineer to access the hub face 22 and the bearing 23. In particular, the maintenance engineer can connect a bearing lifting tool 93 to the bearing 23 and then lift it upwardly out of the exposed hub face 22.

Conversely, a new bearing can be lowered into the generator 2 as a replacement for a removed bearing. Once fitted, the base 3 can then be wheeled out of the building 9 to the loading location, before the generator support 4 is tilted back up to the upright position using the crane line 7. This then allows the mounted generator 2 to be attached to the lifting device 10, and then detached from the upending device 1 for lifting up to the nacelle.

The above arrangement means that a simplified upending device 1 and crane can be used to upend a wind turbine generator in a controlled manner, without the need for separate hydraulic systems or heavy-duty upending tools. This allows use in combination with a lifting tool 10 for lifting a separated generator 2 down from a nacelle because it allows the generator 2 to be directly transitioned from its connection to a lifting device 10 to the upending device 1. From there, the mounted generator can be easily moved on the base without having to detach it. It is particularly advantageous because it allows the generator 2 to be easily moved into a repair location to allow maintenance operations to be undertaken. This provides for, for example, repairs to be undertaken within a covered enclosure, without having to retract a roof. Access by a maintenance engineer can be facilitated through an elevated platform, and the main bearing 23 can be withdrawn from the generator 2 using a simple lifting device. During this process, the risk of damage to internal components, such as the stator can be mitigated by locking the position of the parts. Accordingly, the upending device provides for simplified generator refurbishment and repair.

It will be understood that the embodiment illustrated above shows applications of the invention only for the purposes of illustration. In practice the invention may be applied to many different configurations, the detailed embodiments being straightforward for those skilled in the art to implement.

## Claims

1. A wind turbine generator upending device for upending a wind turbine generator, wherein the wind turbine generator has a hub face to which a blade hub is attachable to the generator and a nacelle face to which the generator is attachable to a nacelle, the device comprising:
a base;
a generator support comprising an interface for connecting to the nacelle face for mounting a generator thereto;
a pivotable coupling for pivotably connecting the generator support to the base, wherein the generator support is pivotable between an upright position where the generator is mounted in an upright orientation and a horizontal position where the generator is mounted in a horizontal orientation; and
a crane attachment for connecting the generator support to a crane line for controlling the pivoting of the generator support between its upright and horizontal positions.

2. A wind turbine generator upending device according to claim 1, wherein the base further comprises one or more wheels for moving the base along a surface.

3. A wind turbine generator upending device according to claim 1 or 2, wherein the one or more wheels are for engagement in a track.

4. A wind turbine generator upending device according to any preceding claim, wherein the crane attachment is provided on a distal end of the generator support.

5. A wind turbine generator upending device according to any preceding claim, wherein the generator support comprises frame locking formations for locking the generator support to the base when the generator support is in a horizontal position.

6. A wind turbine generator upending device according to any preceding claim, wherein the base comprises a frame locking mechanism for locking the base to the generator support when the generator support is in a horizontal position.

7. A wind turbine generator upending device according to any preceding claim, wherein the base comprises a rotor locking mechanism for locking a rotor on the generator when the generator support is in a horizontal position.

8. A wind turbine generator upending device according to any preceding claim, wherein the pivotable coupling comprises a receptacle for releasably receiving the generator support.

9. A wind turbine generator upending device according to any preceding claim, further comprising an upright position locking mechanism for releasably securing the pivotable coupling in the upright position.

10. A wind turbine generator upending device according to any preceding claim, wherein the upright position of the pivotable coupling is an angle of between 85 degrees and 105 degrees with respect to the base at the side to which the generator is connectable to the device, more preferably between 90 degrees and 100 degrees, more preferably still between 92 and 98 degrees, most preferably around 96 degrees.

11. A method of using the wind turbine upending device according to any one of claims 1 to 10, the method comprising the steps of:
providing the generator support in an upright position;
mounting the generator to the generator support by connecting to the nacelle face of the generator the interface of the generator support;
connecting the generator support to the crane line using the crane attachment; and
pivoting the generator support under the control of the crane line from its upright position to its horizontal position.

12. A method according to claim 11, further comprising the step of locking the generator support to the base once the generator support is in a horizontal position.

13. A method according to claim 11 or 12, further comprising the step of locking a rotor on the generator when the generator support is in a horizontal position.

14. A method according to any of claims 11 to 13, further comprising the steps of:
disconnecting the crane line from the generator support once the generator support is in a horizontal position; and
moving the base laterally with the generator mounted in its horizontal orientation into a repair location.

15. A method according to any of claims 11 to 14, further comprising the step of:
removing a bearing from the generator mounted in its horizontal orientation, wherein the generator is connected to the generator support by its nacelle face and the bearing is removed by lifting upwards from the hub face.
